(19) Europäisches Patentamt
European Patent Office
Office européen des brevets

(11) **EP 0 891 589 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(21) Anmeldenummer: **97918060.1**

(22) Anmeldetag: **01.04.1997**

(51) Int Cl.$^6$: **G06F 17/27**, G10L 5/06

(86) Internationale Anmeldenummer:
**PCT/DE97/00657**

(87) Internationale Veröffentlichungsnummer:
**WO 97/37311 (09.10.1997 Gazette 1997/43)**

(54) **ANORDNUNG ZUR ERSTELLUNG EINES DIGITALEN WÖRTERBUCHS UND VERFAHREN ZUM AUFBAU EINES DIGITALEN WÖRTERBUCHS MIT HILFE EINES RECHNERS**

DEVICE FOR COMPILING A DIGITAL DICTIONARY AND PROCESS FOR COMPILING A DIGITAL DICTIONARY BY MEANS OF A COMPUTER

DISPOSITIF POUR ELABORER UN DICTIONNAIRE NUMERIQUE ET PROCEDE POUR CONSTITUER UN DICTIONNAIRE NUMERIQUE AU MOYEN D'UN ORDINATEUR

(84) Benannte Vertragsstaaten:
**DE FR GB IT SE**

(30) Priorität: **02.04.1996 DE 19613266**

(43) Veröffentlichungstag der Anmeldung:
**20.01.1999 Patentblatt 1999/03**

(73) Patentinhaber: **SIEMENS AKTIENGESELLSCHAFT**
**80333 München (DE)**

(72) Erfinder: **KLEINSCHMIDT, Peter**
**D-81735 München (DE)**

(56) Entgegenhaltungen:
EP-A- 0 602 296          EP-A- 0 661 688

## Beschreibung

Ein erhebliches Problem bei der rechnergestützten Spracherkennung besteht in der Größe des gespeicherten Wortschatzes. Da die rechnergestützte Spracherkennung durch Vergleich von Folgen von Merkmalsvektoren, die jeweils ein Wort repräsentieren, in einem Merkmalsraum durchgeführt wird, wird die Spracherkennung mit einer Größenanzahl zu vergleichender Worte immer ungenauer. Die Ursache für die steigende Ungenauigkeit der Spracherkennung bei steigender Anzahl zu vergleichender Worte liegt in der höheren Anzahl von Folgen von Merkmalsvektoren in dem Merkmalsraum. Durch die erhöhte Anzahl von Merkmalsvektoren werden die Abstände der Merkmalsvektoren voneinander in dem Merkmalsraum geringer und somit wird eine Klassifikation des zu erkennenden Wortes ebenso immer problematischer.

Es ergibt sich also die Notwendigkeit der Reduktion des Wortschatzes. Ein Problem bei der Reduktion des Wortschatzes liegt jedoch darin, daß diejenigen Worte, die nicht mit den entsprechenden Folgen von Merkmalsvektoren gespeichert sind, auch nicht erkannt werden.

Weiterhin ist ein Nachteil in einer Speicherung eines großen Wortschatzes in dem erheblichen Speicherbedarf zu sehen. Dieser hohe Speicherplatzbedarf führt zu erheblichen Kosten, die bei Verwendung eines zu großen, der Anwendung nicht angepaßten Wortschatzes nicht zu vermeiden sind.

Der Aufbau eines Text-Phonem-Konverters ist beispielsweise aus den Dokumenten [1], [2], [3] bekannt.

Eine Übersicht über Grundlagen von Expertensystemen sind in [4] beschrieben.

EP-A-0,661,688 beschreibt ein Spracherkennungssystem mit einem Kernwörterbuch und mehreren, vorgefertigten Teilwörterbüchern, die in Abhängigkeit von der geografischen Region spezielle Worte enthalten.

Der Erfindung liegt das Problem zugrunde, eine Anordnung zur Erstellung eines digitalen Wörterbuchs anzugeben, mit der eine flexible, günstige und qualitativ hochwertige Spracherkennung anhand des digitalen Wörterbuches realisiert werden kann. Ein weiteres Problem ist es eine Anordnung zur Spracherkennung anzugeben unter Verwendung des digitalen Wörterbuchs. Ferner liegt der Erfindung das Problem zugrunde, ein Verfahren zur Erstellung eines digitalen Wörterbuchs mit Hilfe eines Rechners anzugeben, welches eine flexible, günstige und qualitativ hochwertige Spracherkennung anhand des digitalen Wörterbuches ermöglicht.

Die Probleme werden durch die Anordnung gemäß Patentanspruch 1, der Anordnung gemäß Patentanspruch 2 sowie durch das Verfahren gemäß Patentanspruch 7 gelöst.

Die Anordnung gemäß Patentanspruch 1 weist ein Mittel zum Einlesen beliebiger elektronischer Dokumente, sowie einen ersten Speicher zur festen Speicherung von Standard-Worten und deren Phonemfolgen und einen zweiten Speicher zur temporären Speicherung Zusatz-Worte und deren Phonemfolgen sowie einen Text-Phonem-Konverter auf. Durch das Mittel zum Auswählen und Einlesen beliebiger elektronischer Dokumente werden anhand unterschiedlichster Kriterien automatisch aus einer beliebigen Menge von elektronischen Dokumenten diejenigen Dokumente ausgewählt und eingelesen, die zu einer vorgebbaren Anwendungssituation einen passenden Wortschatz enthalten. Aus den Worten werden Zusatz-Worte ausgewählt, zu denen die entsprechenden Phonemfolgen mittels des Text-Phonem-Konverters gebildet werden. Die Zusatz-Worte und die entsprechenden Phonemfolgen werden in dem zweiten Speicher temporär gespeichert. Mindestens die Standard-Worte und die Zusatz-Worte und jeweils deren Phonemfolgen bilden das digitale Wörterbuch.

Durch diese Anordnung ist es möglich, jeweils für die Dauer einer bestimmten charakteristischen Anwendung einen anwendungsspezifischen Wortschatz zu ermitteln, und diese Worte zusammen mit den entsprechenden Phonemfolgen temporär abzuspeichern und dem digitalen Wörterbuch temporär einzugliedern. Wenn sich die Anwendung ändert, werden wiederum neue elektronische Dokumente ermittelt und aus diesen wiederum Zusatz-Worte ausgewählt, die dann mit den entsprechenden Phonemfolgen in dem zweiten Speicher wiederum temporär abgespeichert werden. Damit ist durch die erfindungsgemäße Anordnung eine erhebliche Reduktion von Speicherplatzbedarf erreicht.

Die Anordnung gemäß Patentanspruch 2 weist im Vergleich zu der Anordnung gemäß Patentanspruch 1 zusätzlich ein Mittel zur sprecherunabhängigen Spracherkennung auf. Dadurch wird es durch die Reduktion des jeweils untersuchten (verglichenen) Wortschatzes bei der Spracherkennung möglich, eine bessere Erkennungsleistung zu erreichen, als dies mit den bekannten Anordnungen möglich ist, da die Anzahl zu vergleichender Worte verringert wurde, ohne jedoch für die Anwendung spezifische, diese charakterisierende, Worte nicht zu berücksichtigen. Ferner ist die erfindungsgemäße Anordnung sehr flexibel unter verschiedensten Anwendungssituationen einsetzbar, ohne daß aufwendige Trainingsphasen des Wortschatzes für jede charakteristische Anwendungssituation nötig sind. Dadurch wird ebenso ein erheblich geringerer Bedarf an Speicherplatz erreicht, was zu einer erheblichen Einsparung von Kosten für die Anordnung zur Spracherkennung führt.

Bei dem Verfahren gemäß Patentanspruch 7 wird ein digitales Wörterbuch mit Hilfe eines Rechners aufgebaut, welches zu Beginn des Verfahrens schon Standard-Worte und den Standard-Worten zugeordnete Phonemfolgen aufweist. Es werden in einem ersten Schritt anwendungsabhängig elektronische Dokumente bestimmt, und aus den elektronischen Dokumenten Zusatz-Worte ausgewählt. Für die Zusatz-Worte wird mit Hilfe des Text-Phonem-Konverters jeweils eine Phonemfolge gebildet, die dem jeweiligen Zusatz-Wort zugeordnet wird. Die Zusatz-Worte werden temporär anwendungsabhängig gespeichert und temporär dem digitalen Wörterbuch zugeordnet. Durch das erfindungsgemäße Verfahren wird ein digitales Wörterbuch in einer Weise aufgebaut, die sehr flexibel an sich ändernde Anwendungen anpassbar ist. Damit wird eine Spracherkennung, die das auf die erfindungsgemäße Weise aufgebaute Wörterbuch verwendet, unter geringen Kosten schnell und sicher durchgeführt, da zum einen die Anzahl fest gespeicherter Worte verringert wird und zum anderen die Dichte der einzelnen Phonemfolgen in dem Merkmalsraum ebenso verringert wird, was zu besseren Erkennungsleistungen in der Spracherkennung führt.

Vorteilhafte Weiterbildungen der erfindungsgemäßen Anordnungen sowie vorteilhafte Weiterbildungen des erfindungsgemäßen Verfahrens ergeben sich aus den abhängigen Ansprüchen.

Für die erfindungsgemäße Anordnung ist es in einer Weiterbildung vorteilhaft, eine Entscheidungseinheit WE vorzusehen, durch die eine Auswahl der Zusatz-Worte aus den elektronischen Dokumenten durchgeführt wird. Die Auswahl kann auf unterschiedlichste Weise erfolgen. Damit wird durch diese Weiterbildung eine weitere Flexibilisierung der Anwendbarkeit der Anordnung zur Spracherkennung erreicht. Auch wird eine weitere Reduktion des Speicherplatzbedarfs durch diese Weiterbildung erreicht, da durch eine gezielte Auswahl der Zusatz-Worte aus den Worten der elektronischen Dokumente nicht alle Worte temporär gespeichert werden müssen, sondern nur diejenigen, die tatsächlich von größerer Bedeutung bezüglich der jeweiligen Anwendungssituation sind.

Weiterhin ist es in einer Weiterbildung der Anordnung vorteilhaft, einen dritten Speicher vorzusehen, in dem temporär Vorrats-Worte und deren Phonemfolgen gespeichert werden, wobei die Phonemfolgen eine höhere Qualität aufweisen als die Phonemfolgen, die von dem Text-Phonem-Konverter gebildet werden. Durch diese Weiterbildung wird die Qualität der "Phonemprototypen" erhöht, wodurch auch die Ergebnisse der Sprecherkennung deutlich verbessert werden.

Ferner ist es vorteilhaft, eine Anordnung vorzusehen, mit der für von einem Benutzer eingesprochene Worte Phonemfolgen gebildet werden und diese ebenfalls abgespeichert werden. Damit ist die Anwendbarkeit der Anordnung nicht mehr lediglich auf elektronische Dokumente beschränkt, sondern die Anordnung kann durch diese Weiterbildung auch von einem Benutzer eingesprochene Worte verarbeiten. Dies führt zu einer erhöhten Flexibilität der Anwendbarkeit der Anordnung zur Spracherkennung.

Ferner ist es für das erfindungsgemäße Verfahren gemäß Patentanspruch 7 in einer Weiterbildung vorteilhaft, die Bestimmung, also die Auswahl der elektronischen Dokumente nach unterschiedlichen Vorschriften durchzuführen.

So ist es beispielsweise vorteilhaft, die elektronischen Dokumente eindeutig bestimmten Anwendungen zuzuordnen, wodurch die Geschwindigkeit der Durchführung der Bestimmung der elektronischen Dokumente erheblich erhöht wird.

Eine Verfeinerung und weitere Flexibilisierung der Auswahl der elektronischen Dokumente wird dadurch erreicht, daß gesprochene Worte eines Benutzers von der Anordnung zur Spracherkennung erkannt werden und die Bestimmung anhand der erkannten Worte sowie einer vorgegebenen ersten Regelbasis erfolgt. Damit wird die eigentliche Auswahl der elektronischen Dokumente erheblich besser an die Anwendung angepasst und somit werden Zusatz-Worte ausgewählt, die der jeweiligen Anwendung sehr gut entsprechen.

Ferner ist es vorteilhaft, anhand der Regelbasis die Auswahl in einem interaktiven Dialog zwischen der Anordnung und dem Benutzer zu ermitteln, um somit eine weitere Verfeinerung der Auswahl zu erreichen. Auch ist eine sehr einfache Weiterbildung des erfindungsgemäßen Verfahrens darin zu sehen, daß die Auswahl anhand von Dokumenttypen der elektronischen Dokumente erfolgt.

Ferner ist es vorteilhaft, die Auswahl der Zusatz-Worte aus den elektronischen Dokumenten in einer Weise durchzuführen, daß in bestimmter Weise markierte Worte automatisch als Zusatz-Worte ausgewählt werden. Damit wird die Auswahl der Zusatz-Worte erheblich beschleunigt. Weiterhin ist es vorteilhaft, die Auswahl der Zusatz-Worte anhand einer vorgegebenen zweiten Regelbasis zu treffen. Dadurch wird die Auswahl der Zusatz-Worte erheblich verfeinert, wodurch die Anzahl temporär gespeicherter Zusatz-Worte reduziert wird, ohne die Zusatz-Worte mit erheblicher Bedeutung bezüglich des Spracherkennungsprozesses in der jeweiligen Anwendung merklich zu reduzieren.

Weiterhin ist es vorteilhaft, für die einzelnen Markierungen in den elektronischen Dokumenten einen Wichtigkeitsfaktor abzuleiten, um daraus indirekt nur diejenigen markierten Worte auszuwählen, die tatsächlich von Bedeutung sind. Dies führt zu einer weiteren Reduktion des Speicherbedarfs, da eine geringere Anzahl Zusatz-Worte gespeichert wird. Auch wird die Erkennungsleistung der Spracherkennung, die das digitale Wörterbuch verwendet, weiter erhöht, da nur eine geringere Anzahl von Zusatz-Worten miteinander verglichen werden muß. Somit wird die Dichte des Merkmalsraums weiter reduziert.

Weiterhin ist es vorteilhaft, anhand der Dokumenttypen des jeweiligen elektronischen Dokuments Markierungen zu bestimmen, die zur Auswahl der Zusatz-Worte verwendet werden.

Die Qualität der "Prototypen" der Phonemfolgen wird dadurch erhöht, daß vorgegebene Vorrats-Worte mit entsprechenden Phonemfolgen mit berücksichtigt werden, die temporär gespeichert werden. Die Phonemfolgen der Vorrats-Worte weisen eine höhere Qualität auf als die Phonemfolgen, die von dem Text-Phonem-Konverter gebildet werden, wodurch eine Erhöhung der später unter Verwendung des digitalen Wörterbuchs durchgeführten Spracherkennung erreicht wird.

Damit auch die Berücksichtigung von Worten, die von einem Benutzer eingesprochen werden, möglich ist, ist es in einer Weiterbildung des Verfahrens vorteilhaft, für das jeweils gesprochene Sprachsignal eine Phonemfolge zu bestimmen und diese abzuspeichern.

Ein Ausführungsbeispiel ist in den Figuren dargestellt und wird im weiteren näher erläutert.

Es zeigen

Fig. 1     die erfindungsgemäße Anordnung zur Erstellung eines digitalen Wörterbuchs mit einigen Weiterbildungen in Form eines Blockdiagramms;

Fig. 2     die erfindungsgemäße Anordnung zur Spracherkennung mit einigen Weiterbildungen in Form eines Blockdiagramms;

Fig. 3     eine Weiterbildung der erfindungsgemäßen Anordnung zur Spracherkennung mit einem Mittel zum Vergleichen eines eingesprochenen Sprachsignals mit gespeicherten Phonem-Merkmalsvektoren;

Fig. 4     eine Skizze, in der eine Weiterbildung der erfindungsgemäßen Anordnung um ein Kopfverfolgungs-System dargestellt ist;

Fig. 5     ein Ablaufdiagramm, in dem das erfindungsgemäße Verfahren dargestellt ist;

Fig. 6     ein Blockdiagramm, in dem verschiedene Alternativen zur Bestimmung der elektronischen Dokumente dargestellt sind;

Fig. 7     ein Blockdiagramm, in dem verschiedene Alternativen zur Auswahl der Zusatz-Worte aus den elektronischen Dokumenten dargestellt sind;

Fig. 8     ein Ablaufdiagramm, in dem ein Verfahren zur Spracherkennung unter Verwendung eines digitalen Wörterbuchs, welches auf die erfindungsgemäße Weise erstellt wurde, dargestellt ist.

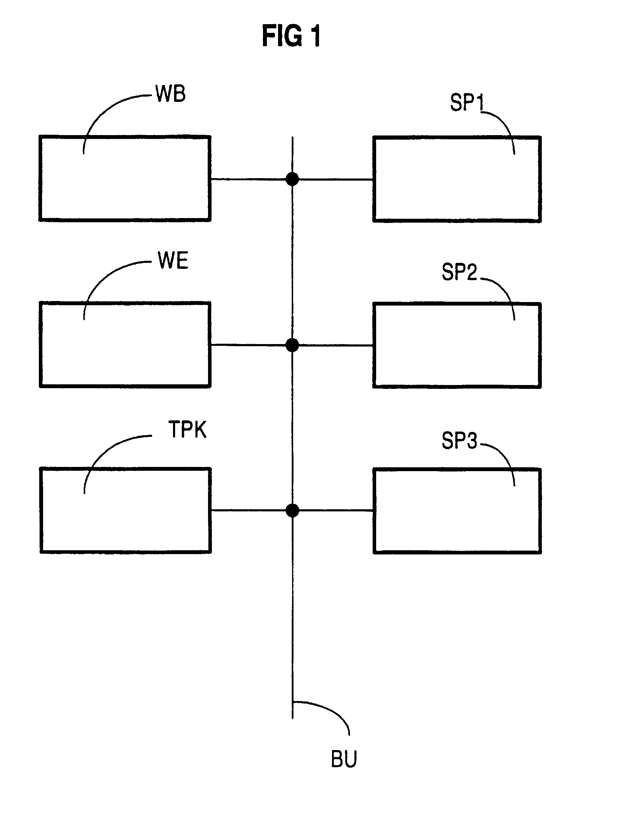

In Fig. 1 ist die Anordnung zur Erstellung eines digitalen Wörterbuchs dargestellt.

Die Anordnung zur Erstellung eines digitalen Wörterbuchs umfaßt mindestens folgende Komponenten:

-   ein erstes Mittel WB zum Auswählen und Einlesen elektronischer Dokumente,

-   einen Text-Phonem-Konverter TPK,

-   einen ersten Speicher SP1 zur festen Speicherung von Standard-Worten und von Phonemfolgen, die jeweils den Standard-Worten zugeordnet sind, sowie

-   einen zweiten Speicher SP2 zur temporären Speicherung von Zusatz-Worten, die von dem ersten Mittel WB zum Auswählen und Einlesen der elektronischen Dokumente sowie der Phonemfolgen für aus den Worten der elektronischen Dokumente ausgewählten Zusatz-Worte, die in dem Text-Phonem-Konverter TPK gebildet werden, gespeichert werden.

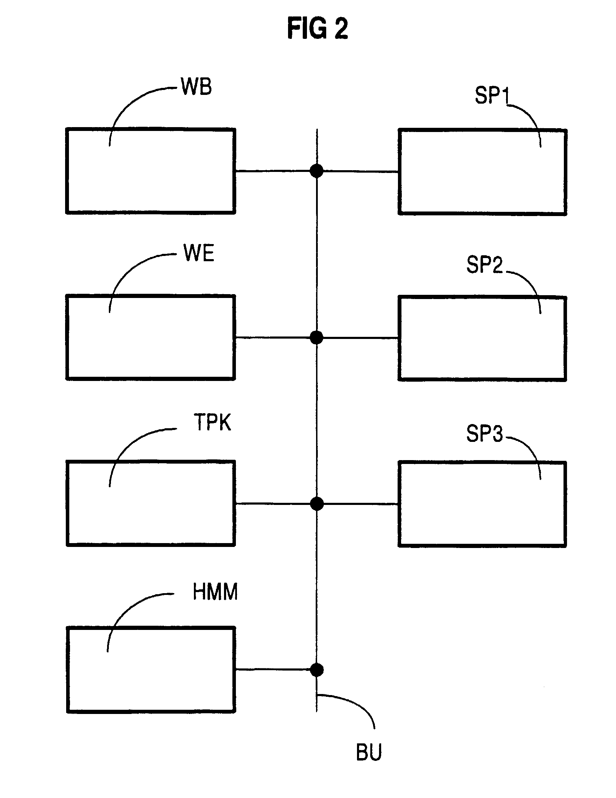

Die Anordnung zur Spracherkennung weist dieselben Komponenten auf wie die Anordnung zur Erstellung eines digitalen Wörterbuchs. Zusätzlich ist bei der Anordnung zur Spracherkennung ein zweites Mittel HMM zur sprecherunabhängigen Spracherkennung vorgesehen (vgl. Figur 2).

Die einzelnen Komponenten sind jeweils über einen Bus BU miteinander gekoppelt.

Die einzelnen Komponenten der Anordnungen werden im Zusammenhang mit dem Verfahren näher erläutert.

Der Aufbau des Text-Phonem-Konverters TPK ist beispielsweise aus dem Dokument [1] bekannt.

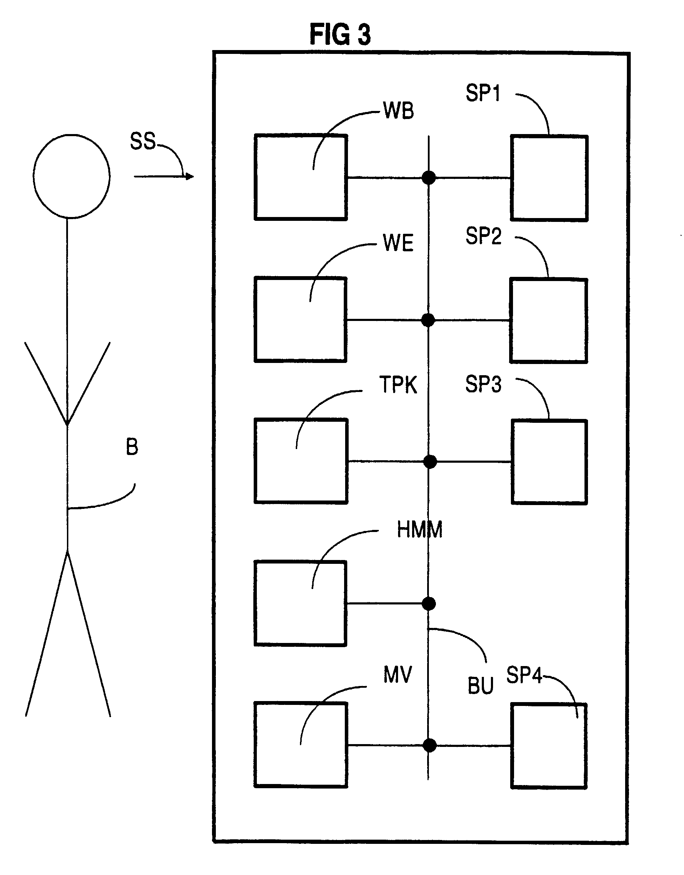

In Fig. 3 ist eine Weiterbildung der Anordnung zur Spracherkennung dargestellt, bei dem von einem Benutzer B gesprochene Worte in Form eines Sprachsignals SS von der Anordnung zur Spracherkennung digitalisiert werden. In einem dritten Mittel MV zum Vergleichen von Phonem-Merkmalsvektoren wird für das jeweilige Sprachsignal SS eine Folge von Phonemen gebildet, die dann zusammen mit dem digitalen Sprachsignal SS in einem im weiteren erläuterten vierten Speicher SP4 gespeichert werden.

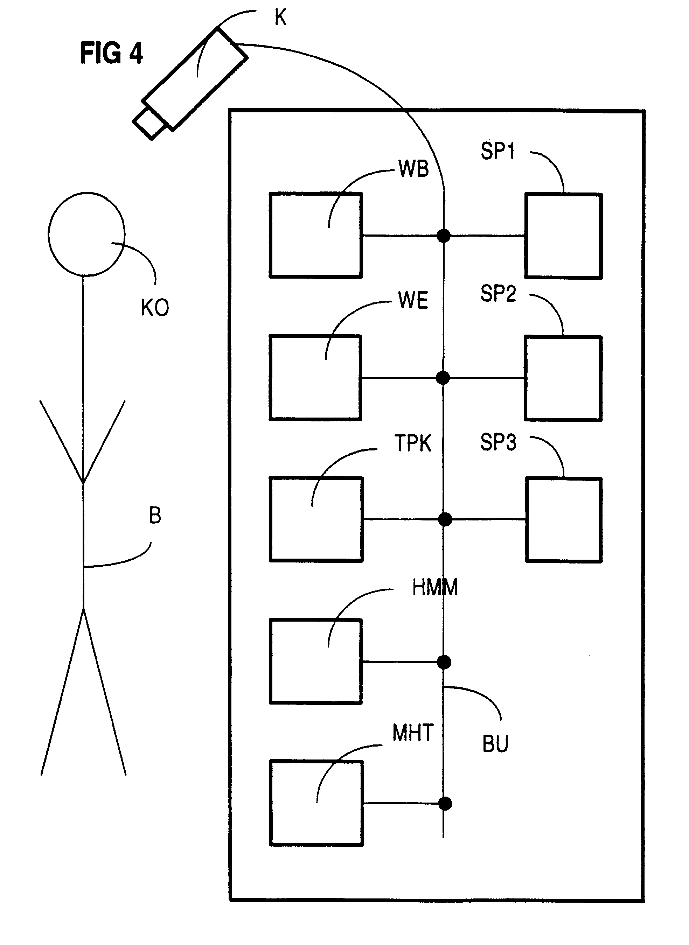

In Fig. 4 ist ein Kopfverfolgungs-System (Headtracking-System) mit einer Kamera K dargestellt. Die Kamera K nimmt eine Folge von Bildern eines Zielobjekts, beispielsweise den Kopf KO eines Benutzers B auf, und führt die entsprechenden Bildsignale der Anordnung zur Spracherkennung zu. In der Anordnung zur Spracherkennung ist ferner in dieser Weiterbildung ein viertes Mittel MHT zur Kopfverfolgung vorgesehen, dessen Ausgestaltung im weiteren näher erläutert wird. An dieser Stelle sei lediglich erläutert, daß durch das vierte Mittel MHT zur Kopfverfolgung eine Auswahl der elektronischen Dokumente erfolgt. Dies geschieht in einer Weise, die im weiteren im Zusammenhang mit dem Verfahren näher erläutert wird.

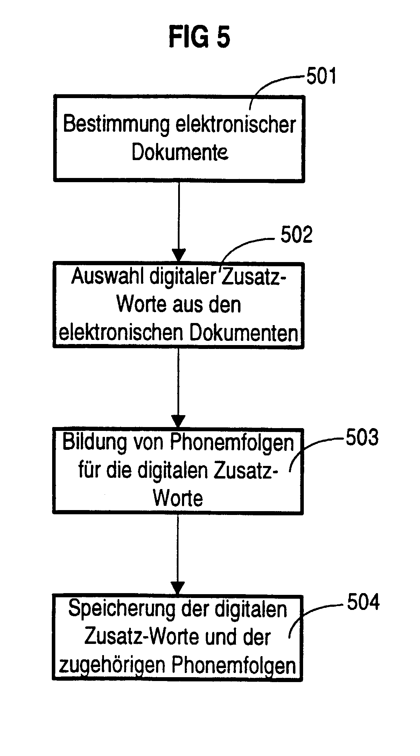

In Fig. 5 ist in Form eines Ablaufdiagramms das erfindungsgemäße Verfahren in einzelnen Verfahrensschritten dargestellt. In einem ersten Schritt 501 werden aus einer Vielzahl elektronischer Dokumente diejenigen elektronischen Dokumente bestimmt, aus denen in einem weiteren Schritt 502 Zusatz-Worte ausgewählt werden, die für eine im weiteren erläuterten Anwendungssituation einen spezifischen Wortschatz enthalten. Dieser anwendungsspezifische Wortschatz in Form der Zusatz-Worte werden dem Text-Phonem-Konverter TPK zugeführt, in dem für die Zusatz-Worte jeweils eine Phonemfolge gebildet wird 503. Die Phonemfolge sowie das jeweilige Zusatz-Wort werden in einem zweiten Speicher SP2 abgespeichert 504.

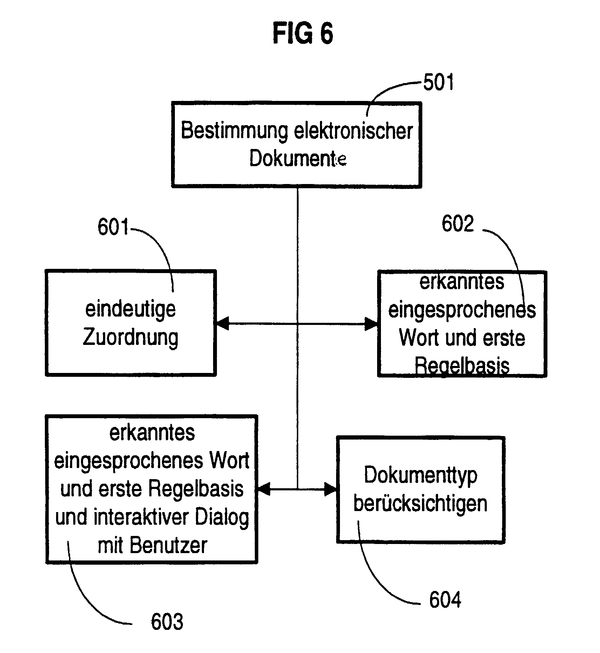

Zur Bestimmung der elektronischen Dokumente 501 sind unterschiedlichste Möglichkeiten vorgesehen, die in Fig. 6 dargestellt sind. Die Bestimmung kann beispielsweise auf mindestens eine der folgenden Arten erfolgen:

- Es kann beispielsweise eine eindeutige Zuordnung von elektronischen Dokumenten für eine bestimmte Anwendungssituation vorgegeben werden 601,
- weiterhin ist es in einer Weiterbildung vorgesehen, anhand von Worten, die von dem Benutzer B in die Anordnung zur Spracherkennung eingesprochen wurden, und von der Anordnung erkannt wurden, sowie anhand einer vorgegebenen ersten Regelbasis die Auswahl der elektronischen Dokumente zu bestimmen 602,
- ferner ist es vorgesehen, anhand der erkannten Worte sowie anhand der ersten Regelbasis zusammen mit dem Benutzer B in einem interaktiven Dialog zwischen der Anordnung zur Spracherkennung und dem Benutzer B die Auswahl der elektronischen Dokumente zu ermitteln 603,
- für elektronische Dokumente, die jeweils einen vorgebbaren Dokumenttyp aufweisen, werden die elektronischen Dokumente anhand des Dokumenttyps ausgewählt 604.

Allen unterschiedlichen Varianten des Verfahrens liegt die erfinderische Idee zugrunde, daß zusätzlich zu ohnehin in dem ersten Speicher SP1 gespeicherten Standard-Worten und den entsprechenden Phonemfolgen für die Standard-Worte, die dort fest gespeichert sind, der Wortschatz eines digitalen Wörterbuchs anwendungsspezifisch temporär erweitert wird.

Die Anordnung zur Spracherkennung hat hierbei Zugriff auf eine Vielzahl unterschiedlichster elektronischer Dokumente, die beispielsweise Text, Bildobjekte oder auch Sprache oder Videos aufweisen können.

Das Problem, welches durch die Anordnung sowie das Verfahren gelöst wird, kann anhand eines sehr einfachen, die Allgemeingültigkeit jedoch in keinster Weise einschränkenden Beispiels erläutert werden.

Man kann sich beispielsweise die Anordnung zur Erstellung eines digitalen Wörterbuchs oder die Anordnung zur Spracherkennung in einer Situation in einem Fahrzeug vorstellen, in der der Fahrzeugführer nach einer Wegbeschreibung sucht. Die Anordnung zur Spracherkennung hat üblicherweise in dem ersten Speicher SP1 sicherlich als Standard-Worte beispielsweise nicht Namen kleinerer Ortschaften gespeichert.

Solche Informationen würden den ersten Speicher SP1 überdimensional groß werden lassen. Diese Situation wird erheblich verschärft, wenn man nicht nur übliche Städtenamen, sondern auch Straßennamen kleiner Orte, die lediglich auf sehr regionalen Stadtplänen zu finden sind, im Rahmen der Spracherkennung mit verarbeiten möchte. Die erfindungsgemäße Lösung besteht in diesem beispielhaft angeführten Anwendungsszenario darin, daß beispielsweise elektronische Dokumente, die spezifische Informationen über die gesuchten Orte bzw. Regionen aufweisen, ausgewählt werden und dann aus diesen elektronischen Dokumenten die Zusatz-Worte ausgewählt werden, die dem Text-Phonem-Konverter TPK zugeführt werden und dann zusammen mit den gebildeten Phonemfolgen in dem zweiten Speicher SP2 vorzugsweise mindestens für die Dauer der spezifischen Anwendung gespeichert werden. Diese gespeicherten Daten werden in das digitale Wörterbuch temporär aufgenommen.

Damit wird ein sehr flexibles, anwendungsspezifisches digitales Wörterbuch geschaffen, das sich auf verschiedene Situationen und Anwendungen sehr schnell "einstellen" kann. Ein weiteres Anwendungsszenario einfacher Art ist beispielsweise in einer Telefonauskunft zu sehen, in der die Anordnungen verwendet werden. Hier können beispielsweise regional definierte Telefonbücher, die jeweils unterschiedlichste Eigennamen aufweisen, als elektronische Dokumente ausgewählt werden, und beispielsweise die Eigennamen der entsprechenden Orte, die zu dem aktuellen Zeitpunkt, also der aktuellen Anwendung von Interesse sind, in den zweiten Speicher SP2 gespeichert werden.

In einer Weiterbildung ist ein dritter Speicher SP3 vorgesehen zur Speicherung vorgegebener Vorrats-Worte und den Vorrats-Worten zugeordneter Phonemfolgen, die abhängig von der Anwendung in jeder Anwendung temporär gespeichert werden. Die Phonemfolgen der Vorrats-Worte weisen eine höhere Qualität auf als die Phonemfolgen, die von dem Text-Phonem-Konverter TPK gebildet werden. Wird ein Zusatz-Wort in dem zweiten Speicher SP2 gespeichert, so wird in dieser Ausgestaltung zuerst überprüft, ob das entsprechende Wort nicht schon als Vorrats-Wort in dem dritten Speicher SP3 gespeichert ist. Ist dies der Fall, so wird das Vorrats-Wort mit der qualitativ besseren Phonemfolge in das digitale Wörterbuch aufgenommen.

Im weiteren werden Alternativen zur Bestimmung der elektronischen Dokumente durch das erste Mittel WB zum Auswählen und Einlesen elektronischer Dokumente beschrieben. Das erste Mittel WB zum Auswählen und Einlesen ist in der Weise ausgestaltet, daß die jeweils beschriebene Funktionalität gewährleistet ist.

**Eindeutige Zuordnung der elektronischen Dokumente 601.**

Eine mögliche Weiterbildung des Verfahrens sowie der Anordnung besteht darin, bestimmten Anwendungen bzw. Aktionen eine beliebige Anzahl vorgegebener elektronischer Dokumente zuzuordnen, die bei Durchführung der Aktion, bzw. bei der entsprechenden Anwendung von dem ersten Mittel WB zum Auswählen und Einlesen elektronischer Dokumente ausgewählt und eingelesen werden. Diese eindeutigen Zuordnungen sind beispielsweise in einer Liste in einem Speicher der Anordnung zur Spracherkennung gespeichert.

Weiterhin ist es vorteilhaft, nicht lediglich feste Zuordnungen zu treffen, sondern für feste Zuordnungen semantische Bezüge zu schaffen und entsprechend den semantischen Bezügen die elektronischen Dokumente auszuwählen und einzulesen. Die semantischen Bezüge können auch beispielsweise in dem Aufsuchen von Synonymen von Hyper-Links bei Anklicken der Hyper-Links von dem Benutzer B liegen.

**Auswahl der elektronischen Dokumente anhand erkannter gesprochener Worte des Benutzers B und der ersten Regelbasis 602.**

Bei dieser Weiterbildung des Verfahrens und der Anordnung werden von dem Benutzer B gesprochene Worte, die von der Anordnung zur Spracherkennung erkannt werden, zur Auswahl der elektronischen Dokumente verwendet. Dies geschieht dadurch, daß nach Erkennen der gesprochenen Worte diese Worte in der vorgegebenen ersten Regelbasis verwendet werden, mit der die elektronischen Dokumente ausgewählt werden.

Die erste Regelbasis ist sehr anwendungsspezifisch. Zur Verdeutlichung der Vorgehensweise sowie der Ausgestaltung des ersten Mittels WB zum Auswählen und Einlesen elektronischer Dokumente wird folgendes einfaches Beispiel dargestellt. Dieses einfache Beispiel soll jedoch lediglich die Grundzüge der ersten Regelbasis für eine spezifische Anwendung darstellen, schränkt jedoch die Allgemeingültigkeit in keinster Weise ein.

Für die Anwendungssituation, die oben beschrieben wurde, bei der ein Fahrzeugführer in einem Fahrzeug eine Navigationshilfe zum Auffinden eines Zielortes benötigt ist es vorstellbar, daß der Benutzer B unter anderem beispielsweise die Worte "Landkarte", "Deutschland", "regional", "München" in die Anordnung zur Spracherkennung eingesprochen hat. Diese Worte werden von der Anordnung zur Spracherkennung erkannt und der ersten Regelbasis zugeführt. In der ersten Regelbasis sind zur Ermittlung der auszuwählenden elektronischen Dokumente, beispielsweise in diesem Fall einer regionalen Landkarte Münchens folgende speziellen Regeln vorgegeben.
WENN ein erkanntes Wort gleich "Landkarte"

UND
ein erkanntes Wort gleich "Munchen"
UND
ein erkanntes Wort gleich "regional"
DANN
wähle die regionale Landkarte der Stadt München aus.
In diesem Fall wird als elektronisches Dokument die regionale Landkarte Münchens mit dem entsprechenden Wortschatz der regionalen Ortschaften und beispielsweise der entsprechenden Straßennamen ausgewählt und eingelesen. Aus diesem elektronischen Dokument werden die Zusatz-Worte ausgewählt, dem Text-Phonem-Konverter TPK zugeführt, für die Zusatz-Worte die Phonemfolgen gebildet und in dem zweiten Speicher SP2 abgespeichert.
Ein weiteres Anwendungsszenario ist beispielsweise in einem digitalen persönlichen Telefonbuch zu sehen, welches in einem üblichen Rechner mit integrierter Anordnung zur Spracherkennung vorgesehen ist. Will der Benutzer B der Rechnereinheit beispielsweise über den Rechner ein Fax schicken, benötigt der Benutzer B die Telefonnummer des Empfängers des Faxes. Spricht der Benutzer B beispielsweise die Worte "Fax", "Auskunft", "Telefonbuch", und diese Worte werden von der Anordnung zur Spracherkennung erkannt, so sind beispielsweise folgende vorgegebenen Regeln in der ersten Regelbasis vorgesehen.
WENN ein erkanntes Wort gleich "Fax"
UND
ein erkanntes Wort gleich "Telefonbuch"
DANN
wähle das elektronische Dokument "persönliches Telefonbuch" aus.
Eine weitergehende Regel in der ersten Regelbasis zur Verfeinerung dieser Vorgehensweise könnte beispielsweise in der folgenden Regel zu sehen sein:
WENN ein erkanntes Wort gleich "Empfänger"
UND
ein erkanntes Wort gleich "Name des Empfängers"
UND
Name des Empfängers nicht im persönlichen Telefonbuch vorhanden
DANN
wähle automatisch die Auskunft an und ermittle die gesuchte Telefonnummer.

**Auswahl und Einlesen der elektronischen Dokumente anhand erkannter Worte, der ersten Regelbasis, und eines interaktiven Dialogs zwischen der Anordnung zur Spracherkennung und dem Benutzer B 603.**

Es ist weiterhin in einer Ausgestaltung des Verfahrens und der Anordnung vorgesehen, die Auswahl der elektronischen Dokumente nicht lediglich auf die erkannten Worte und die erste Regelbasis zurückzuführen, sondern dieses Lösungsprinzip weiterzuführen und die Auswahl genauer zu treffen in einem interaktiven Dialog zwischen der Anordnung zur Spracherkennung und dem Benutzer B.

Darunter ist beispielsweise folgende Situation zu verstehen. Wenn der Benutzer B beispielsweise die Worte "Wegbeschreibung", "Stadt", "Taufkirchen" gesprochen hat und diese Worte von der Anordnung zur Spracherkennung erkannt wurden, ist es in dieser Ausgestaltung vorgesehen, daß zur weiteren Eingrenzung möglicher auszuwählender elektronischer Dokumente der Benutzer B beispielsweise gefragt wird, ob die Stadt, zu der der Benutzer B eine Wegbeschreibung benötigt, in Deutschland liegt. Wird diese Frage bejaht, kann eine weitere, verfeinernde Frage beispielsweise darin liegen, daß die Anordnung zur Spracherkennung eine Frage an den Benutzer B richtet, ob die Stadt in Norddeutschland oder in Süddeutschland liegt. Diese Vorgehensweise kann beliebig verfeinert werden, jeweils natürlich anwendungsspezifisch. Entsprechend müssen die Regeln der ersten Regelbasis in für den Fachmann bekannter Weise angepaßt werden.

Eine Übersicht über Grundlagen von Expertensystemen sind in [4] beschrieben.

## Auswahl unter Berücksichtigung von Dokumenttypen 604

In einer weiteren Ausgestaltung des Verfahrens und der Anordnung ist es vorgesehen, zur Auswahl der elektronischen Dokumente einen Dokumenttyp zu verwenden. Unter einem Dokumenttyp ist beispielsweise die Angabe, ob es sich bei dem elektronischen Dokument um eine reine Textdatei, um eine Bilddatei, um eine Videodatei, oder eine reine Sprachdatei handelt, zu verstehen. Hierbei kann beispielsweise in dem Anwendungsszenario eines Fahrzeugs Information über auszuwählende elektronische Dokumente aus empfangenen Radiomeldungen, oder auch erkannten Worten entstehen. Weiterhin sind in diesem Zusammenhang unter Dokumenttypen beispielsweise Angaben zu verstehen, ob es sich bei dem elektronischen Dokument um eine Landkarte, ein digitales Telefonbuch, ein Hotel-Reservierungs-Dokument oder, je nach Anwendung, entsprechendes elektronisches Dokument handelt.

Die Ausgestaltung liegt darin, daß anhand erkannter Worte von der Anordnung zur Spracherkennung beispielsweise erkannt wird, daß es sich bei der Anwendung um die Suche nach einem Hotelzimmer handelt. Die benötigten Zusatz-Worte sollten sich dann sinnvollerweise auf die spezielle Anwendung einer Hotelreservierung beziehen. In diesem Fall ist es vorgesehen, diejenigen elektronischen Dokumente auszuwählen und einzulesen, deren Dokumenttyp beispielsweise eine Hotelreservierung oder auch generell ein Hotel beschreiben.

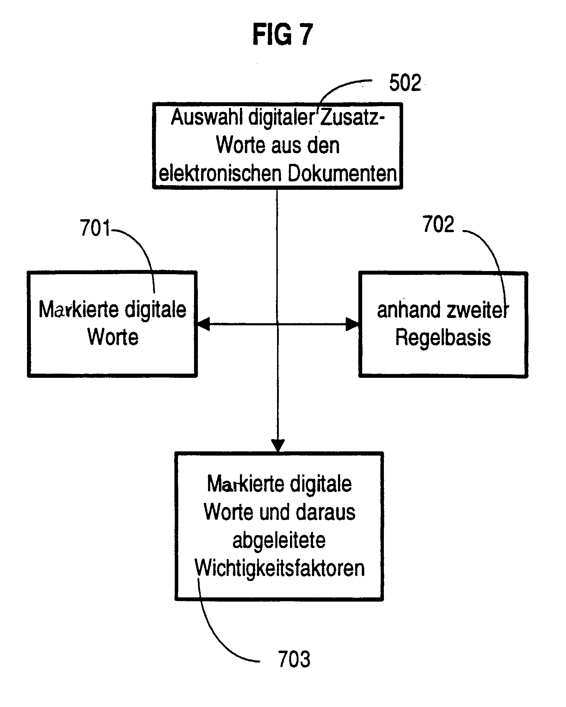

In Fig. 7 sind verschiedene Möglichkeiten zur Auswahl der Zusatz-Worte aus den ausgewählten elektronischen Dokumenten 502 dargestellt.

Die Auswahl der Zusatz-Worte aus den Worten der elektronischen Dokumente kann in einer ersten Ausgestaltung beispielsweise auf die Weise erfolgen, daß auf eine vorgegebene Weise markierte Worte oder Ausdrücke in den elektronischen Dokumenten automatisch als Zusatz-Worte ausgewählt werden 701.

Ein Beispiel einer solchen Markierung ist beispielsweise in der Hypertext-Navigationssprache HTML zu sehen, bei der beispielsweise Überschriften durch entsprechende eindeutige Anfangs- und Endsequenzen markiert werden. Ähnliches Prinzip kann zur allgemeinen Markierung von Worten verwendet werden. Ein weiteres Beispiel einer solchen Markierung ist in der Textverarbeitungssprache LATEX zu sehen, in der einzelne Worte ebenfalls durch eindeutige Anfangs-Steuerungssequenzen und Schluß-Steuerungssequenzen, markiert werden.

In einer weiteren Ausgestaltung ist es vorgesehen, die Auswahl der Zusatz-Worte anhand einer zweiten Regelbasis zu treffen 702.

Die Regeln der zweiten Regelbasis sind wiederum sehr anwendungsspezifisch. Aus diesem Grund soll hier ebenso nur ein sehr grobes Prinzip möglicher Regeln der zweiten Regelbasis dargestellt werden.

Es ist beispielsweise vorstellbar, daß für einen Fall, daß die Anwendung sich hauptsächlich auf Gegenstände bezieht; womit Substantive häufige Verwendung finden werden und aus diesem Grunde kann beispielsweise in diesem Fall eine Regel der zweiten Regelbasis darin bestehen, daß:

WENN die Anwendung hauptsächlich gegenständlichen Bezug hat DANN wähle Substantive als Zusatz-Worte aus den Worten der elektronischen Dokumente aus.

Im Gegensatz dazu kann es beispielsweise in einer Anwendung, die sich hauptsächlich auf Tätigkeiten bezieht, sinnvoll sein, Verben als Zusatz-Worte auszuwählen. Eine mögliche Regel der zweiten Regelbasis hätte dann beispielsweise folgenden prinzipiellen Aufbau:

WENN die Anwendung hauptsächlich Tätigkeiten beschreibt DANN wähle als Zusatz-Worte Verben aus den Worten der elektronischen Dokumente aus.

Eine weitere Möglichkeit kann darin bestehen, daß man diejenigen Worte aus den elektronischen Dokumenten als Zusatz-Worte auswählt, die nicht als Standard-Worte gespeichert sind. Eine mögliche Regel der zweiten Regelbasis hat für diesen Fall den folgenden prinzipiellen Aufbau:

WENN ein Begriff in dem elektronischen Dokument vorkommt und der Begriff nicht als Standard-Wort gespeichert ist, DANN wähle den Begriff als Zusatz-Wort aus.

Eine Verfeinerung der Ausgestaltung der Auswahl markierter Worte als Zusatz-Worte ist darin zu sehen, daß für einzelne Markierungen der Worte Wichtigkeitsfaktoren bestimmt werden 703, anhand derer die Auswahl der Zusatz-Worte getroffen wird. Beispielsweise kann bei der Ermittlung der Wichtigkeitsfaktoren berücksichtigt werden, daß in einer Anwendung beispielsweise die Hierarchie von Überschriften verschiedener Ebenen jeweils hierarchisch in die Wichtigkeitsfaktoren mit einfließen. Auch kann hierbei beispielsweise berücksichtigt werden, daß "fett gedruckte" Wortewichtiger sind als "kursiv gedruckte" Worte, diese jedoch wichtiger sind als unmarkierte Worte.

Eine weitere Ausgestaltung des Verfahrens und der Anordnungen ist in Fig. 2 dargestellt.

Bei der Anordnung zur Spracherkennung ist neben dem zweiten Mittel HMM zur sprecherunabhängigen Spracherkennung mindestens ein vierter Speicher SP4 zur Speicherung von Phonem-Merkmalsvektoren, das Mittel MV zum Vergleichen von Benutzer-Merkmalsvektoren eines Teils des digitalisierten Sprachsignals SS, die den Teil des digitalisierten Sprachsignals SS charakterisieren, mit gespeicherten Phonem-Merkmalsvektoren vorgesehen. Durch die Abbildung von digitalisierten Sprachsignalen, die von einem Benutzer eingesprochen werden, auf schon gespeicherte Merkmalsvektoren von Phonemen ist es möglich, ausschließlich das Lösungsprinzip der sprecherunabhängigen Spracherkennung zu verwenden.

Bei der Weiterbildung des Verfahrens wird das von dem Benutzer B neu eingesprochene digitalisierte Sprachsignal SS in eine beliebige Anzahl von Sprachsignalteilen aufgeteilt. Dann wird für eine vorgebbare Anzahl von Sprachsignalteilen jeweils ein Merkmalsvektor ermittelt, der dann mit den gespeicherten Phonem-Merkmalsvektoren verglichen wird. Aus dem Vergleich wird jeweils ein Ähnlichkeitswert bestimmt, der die Ähnlichkeit des jeweiligen Sprachsignalteils mit dem jeweils verglichenen Phonem-Merkmalsvektor angibt. Die Ähnlichkeitswerte werden jeweils gespeichert und anhand der Ähnlichkeitswerte wird in einem letzten Schritt eine Folge von Phonemen für das digitalisierte Sprachsignal ermittelt. Durch diese Folge wird das digitalisierte Sprachsignal SS beschrieben und wird in einer Phonem-Darstellung in dem vierten Speicher SP4 abgespeichert. Details zu dieser Weiterbildung sind in dem Dokument [5] zu finden.

Durch diese Vorgehensweise wird es möglich, unter reduziertem Speicherplatzbedarf einen sprecherunabhängigen Algorithmus auf neue, eigentlich sprecherabhängige Worte anzuwenden. Die Vorteile dieser Weiterbildung sind v. a. in den Vorteilen der dadurch möglichen Realisierung der kostengünstigen Anordnung zur Spracherkennung zu sehen.

Eine weitere Ausgestaltung des Verfahrens, bei dem ein Kopfverfolgungssystem mit einer Kamera K vorgesehen ist, ist in Fig. 3 dargestellt.

In einem ersten Schritt wird auf interaktive Weise zusammen mit dem Benutzer B bestimmt, was als eine vorgegebene Farbe zum Aufbau einer Farbtabelle klassifiziert werden soll. Hierzu wird durch den Benutzer in einem von einer Kamera K aufgenommenen Bild ein Bildbereich markiert, der die vorgegebene Farbe aufweist. Dies kann vorzugsweise dadurch geschehen, daß z. B. bei Klassifikation von Hautfarbe, der Benutzer B selbst in dem aufgenommenen Bild aufgenommen wird, z. B. die Hand oder Kopf des Benutzers B. Die Hand bzw. der Kopf des Benutzers B auf dem Bild wird dann von dem Benutzer B als Bildbereich markiert, der die vorgegebene Farbe aufweist. Das aufgenommene Bild wird in einer Anordnung gespeichert und zur Weiterverarbeitung zur Verfügung gestellt.

Hier sind auch andere Vorgehensweisen möglich, z. B. kann auch die Farbe eines Kleidungsstücks als vorgegebene Farbe angegeben werden, indem der Benutzer B in dem aufgenommenen Bild z. B. einen Bildbereich markiert, der das Kleidungsstück der vorgegebenen Farbe umfaßt.

Die Markierung kann auf verschiedene Weise erfolgen, sie kann z. B. vorzugsweise durch Verwendung einer Computermaus, der Tastatur, oder allen anderen dem Fachmann bekannten Möglichkeiten zur Markierung von in einer Computereinheit zu bearbeitenden Bildbereichen erfolgen.

Die Größe des markierten Bildbereichs ist von dem Benutzer frei wählbar.

Die Farbinformation aller durch die Anordnung darstellbaren Farben aus dem verwendeten Farbraum, üblicherweise dem dreidimensionalen R-G-B (Rot-Grün-Blau) Raum wird durch eine Transformation in einen zweidimensionalen Farbraum transformiert. Durch die Transformation geht keinerlei Farbinformation verloren.

Die Transformation kann auf verschiedene Weise erfolgen. Vorzugsweise sind folgende Transformationsgleichungen vorgesehen.

Eine mögliche Transformation besitzt folgenden Aufbau:

$$(1) \qquad a = \frac{R}{R + G + B}$$

$$(2) \qquad b = \frac{G}{R + G + B}$$

Hierbei bezeichnen

- R den Anteil der Farbe Rot an der jeweiligen Farbe,
- G den Anteil der Farbe Grün an der jeweiligen Farbe,
- B den Anteil der Farbe Blau an der jeweiligen Farbe,
- a eine erste Raumkoordinate in dem zweidimensionalen Farbraum, und
- b eine zweite Raumkoordinate in dem zweidimensionalen Farbraum.

Weitere Transformationen sind dem Fachmann bekannt und können ohne Einschränkung in dem Verfahren eingesetzt werden.

Durch die Transformation wird jedem Punkt in dem dreidimensionalen Farbraum eindeutig ein Punkt in dem zweidimensionalen Farbraum zugeordnet.

Für den im Vorherigen beschriebenen durch den Benutzer markierten Bildbereich wird ein erster Farbmittelwert berechnet, der einen Durchschnittswert aller in dem markierten Bildbereich vorkommenden Farben repräsentiert. Da eine Farbe in einer Computereinheit durch einen Zahlenwert repräsentiert wird, kann die Berechnung z. B. durch Bildung einer Summe über alle Farbwerte jedes in dem markierten Bildbereich sich befindenden Bildpunktes und anschließende Division durch die Anzahl der in dem markierten Bildbereich sich befindenden Bildpunkte erfolgen. Das Ergebnis ist dann der den ersten Farbmittelwert repräsentierender Zahlenwert. Der erste Farbmittelwert wird ebenso durch einen Punkt im zweidimensionalen Farbraum repräsentiert.

Nun wird auf dieselbe, oben beschriebene Weise in dem markierten Bildbereich ein zweiter Farbmittelwert berechnet, wobei ein Anteil von n% der in dem markierten Bildbereich sich befindenden Bildpunkte unberücksichtigt bleibt bei der Berechnung des zweiten Farbmittelwerts. Der Anteil von n% der unberücksichtigten Bildpunkte sind die Bildpunkte, die in dem zweidimensionalen Farbraum am weitesten von dem ersten Farbmittelwert entfernt sind, also jeweils eine Farbe aufweisen, die sich von dem ersten Farbmittelwert am meisten unterscheidet.

Diese Nichtberücksichtigung von Farbwerten dient zur Fehlerkompensation. Dieses Vorgehen ist sehr vorteilhaft, um z. B. bei der Berechnung von einem die Hautfarbe repräsentierenden zweiten Farbmittelwerts anhand eines markierten Bildbereichs, der durch den Kopf des Benutzers dargestellt wird, Farbunregelmäßigkeiten, wie z. B. die Augen des Benutzers, die sich auch in dem markierten Bildbereich befinden, auszugleichen.

Die Größe von n, also die Angabe, wieviel % der sich in dem markierten Bildbereich befindenden Farbwerte unberücksichtigt bleiben sollen, ist abhängig sowohl von dem Objekt, anhand dessen der zweite Farbmittelwert gebildet werden soll als auch von der benötigten Genauigkeit des zweiten Farbmittelwerts und der zur Verfügung stehenden Rechenleistung. Aus diesem Grund muß die Größe n jeweils an die entsprechende Situation angepaßt werden. Die Größe von n kann vorzugsweise in einem Bereich von 5 - 50 liegen. Das Verfahren ist nicht beschränkt auf den zweiten Farbmittelwert. Mit derselben Vorgehensweise können mehrere Farbmittelwerte, unter Verwendung von unterschiedlichen Werten für n, gebildet werden. Eine höhere Anzahl von Farbmittelwerten erhöht die Qualität der später folgenden Klassifikation. Ohne Einschränkung der Allgemeingültigkeit wird im folgenden nur der zweite Farbmittelwert betrachtet.

Anschließend wird eine beliebige Anzahl von Negativfarbwerten ausgewählt. Unter Negativfarbwerten sind in diesem Zusammenhang Farbwerte zu verstehen, die nicht der vorgegebenen Farbe entsprechen. Vorzugsweise wird mindestens ein die Farbe Weiß repräsentierender Weißpunkt in dem zweidimensionalen Raum als ein Negativfarbwert verwendet. Eine erhöhte Anzahl von Negativfarbwerten verbessert die im weiteren beschriebene Klassifikation aller Farben in eine Farbe, die als der vorgegebenen Farbe zugehörig, d. h. als genügend ähnlich, und in eine der vorgegebenen Farbe nicht ähnlichen Farbe.

Sowohl um den zweiten Farbmittelwert als auch um jeden den jeweiligen Negativfarbwert repräsentierenden Negativfarbpunkt, z. B. um den Weißpunkt, wird eine runde, z. B. kreisförmige oder elliptische Region gebildet. Diese Regionen werden im folgenden als eine Mittelwertregion für den zweiten Farbmittelwert und als Negativfarbregionen für die Regionen um die Negativfarbpunkte bezeichnet.

Die Regionen können beliebige Größe aufweisen, es ist also auch möglich, daß sich Regionen überlappen oder eine Region vollständig eine andere Region umschließt.

Für jeden von der Computereinheit darstellbaren, in den zweidimensionalen Farbraum transformierten Farbwert, der durch den jeweiligen Farbpunkt repräsentiert wird, wird eine Klassifikation durchgeführt, ob der jeweilige Farbpunkt als dem vorgegebenen Farbpunkt, der den zweiten Farbmittelwert repräsentiert genügend ähnlich eingeordnet wird oder ob der jeweilige Farbpunkt als dem vorgegebenen Farbpunkt nicht ähnlich klassifiziert wird.

Die Klassifikation wird in der Weise durchgeführt, daß für jeden von der Computereinheit darstellbaren Farbpunkt ein Lot gefällt wird auf jede Verbindungsgerade des den zweiten Farbmittelwert repräsentierenden vorgegebenen Farbpunkts mit jedem Negativfarbpunkt. Dadurch entstehen genau so viele Lotfußpunkte, darunter ist der Schnittpunkt des jeweiligen Lots mit der entsprechenden Verbindungsgerade zu verstehen, wie Negativfarbpunkte.

Für jeden Lotfußpunkt wird ein erster Abstand berechnet von dem Lotfußpunkt zu dem den zweiten Farbmittelwert repräsentierenden vorgegebenen Farbpunkt. Der erste Abstand wird mit einem zweiten Abstand verglichen, der den Abstand des entsprechenden Lotfußpunktes zu dem jeweiligen Negativfarbpunkt darstellt.

Ein Farbpunkt wird dann als dem zweiten Farbmittelwert repräsentierenden vorgegebenen Farbpunkt genügend ähnlich klassifiziert, wenn für jeden Lotfußpunkt des Farbpunkts der erste Abstand geringer ist als der zweite Abstand und jeder Lotfußpunkt in der Mittelwertregion liegt.

Das binäre Ergebnis wird in der Farbtabelle gespeichert, die nach Abschluß des oben beschriebenen Verfahrens für jeden Farbpunkt in dem zweidimensionalen Farbraum, also für jede von der Computereinheit darstellbaren Farbe einen binären Eintrag enthält.

Die Farbtabelle enthält für jeden Farbwert, der jeweils einen Eintrag in der Farbtabelle eindeutig adressiert, die binäre Information, ob der Farbpunkt als der vorgegebenen Farbe ähnlich klassifiziert wurde oder nicht.

Der Aufbau der Farbtabelle nach dem oben beschriebenen Verfahren ermöglicht eine Echtzeitrealisierung verschiedener Verwendungen der Farbtabelle, da für einen Farbwert nur ein binärer Wert ausgelesen werden muß, damit bekannt ist, ob der Farbwert als der vorgegebenen Farbe genügend ähnlich klassifiziert wurde.

Nachdem die Farbtabelle gebildet wurde, wird für das gesamte von der Kamera K aufgenommene Bild ein beliebiger bekannter Algorithmus zur Kantenverfolgung durchgeführt. Mit Hilfe dieses Verfahrens werden in dem Bild Objekte und deren Objektkanten ermittelt, deren Farbe z. B. laut der Farbtabelle als der vorgegebenen Farbe ähnlich klassifiziert wurden.

Nachdem das Verfahren auf das Bild angewendet wurde, befindet sich möglicherweise eine Vielzahl von Objekten auf dem Bild, die als das Zielobjekt in Frage kommen.

Aus dieser Vielzahl von Objekten wird nun das Zielobjekt ermittelt anhand bekannter Kennzeichen des Zielobjekts. Die Kennzeichen können z. B. durch die Größe des Zielobjekts oder die Form des Zielobjekts repräsentiert werden.

Abhängig von der vorgesehenen Verwendung des Verfahrens kann z. B. noch das geometrische Moment des Zielobjekts berechnet werden.

Anschließend wird für das Zielobjekt ein das Zielobjekt umschreibendes Rechteck ermittelt. Alle Objekte, die die vorgegebene Farbe aufweisen und die sich außerhalb des umschreibenden Rechtecks befinden, werden als dem Hintergrundbild zugehörig eingeordnet.

Das Verfahren kann verbessert werden, indem zu Beginn des Verfahrens von der Kamera ein Hintergrundbild aufgenommen wird, das dieselbe Szene aufnimmt, wie später, wenn das Zielobjekt in der Szene vorhanden ist. Bei dem Hintergrundbild ist das Zielobjekt nicht vorhanden.

Das Verfahren wird in diesem Fall auf die Weise verbessert, daß bei der Klassifikation eines Objekts zu dem Zielobjekt das Objekt nur dann als das Zielobjekt klassifiziert wird, wenn sich das Objekt außerdem nicht auf dem Hintergrundbild befindet.

Wenn das Zielobjekt durch einen Kopf repräsentiert wird, ist das Ergebnis des Verfahrens z. B. die Position des Kopfes innerhalb des Bildes.

Wenn das Zielobjekt durch eine Hand repräsentiert wird, ist das Ergebnis des Verfahrens z. B. die Position der Hand innerhalb des Bildes, die Entfernung der Hand zur Kamera, die das Bild aufnimmt, oder die Position der einzelnen Finger der Hand die z. B. bestimmte Handgesten repräsentieren.

Durch die Weiterverarbeitung nur des umschreibenden Rechtecks, für das im weiteren z. B. eine Bewegungsschätzung durchgeführt wird, um die Position des umschreibenden Rechtecks und damit des Zielobjekts in einem folgenden Bild zu ermitteln, wird der benötigte Rechenbedarf erheblich reduziert gegenüber bekannten Verfahren.

Details über ein Kopfverfolgungssystem sind beispielsweise in dem Dokument [6] zu finden.

Ergebnis des oben beschriebenen Verfahrens ist ein erkanntes Zielobjekt. Anhand des Zielobjekts, beispielsweise anhand von Gesten der Hand oder einer Blickrichtung des Kopfes KO des Benutzers B kann die Bestimmung der elektronischen Dokumente, abhängig von der jeweiligen semantischen Interpretation der Zielobjekte, erfolgen.

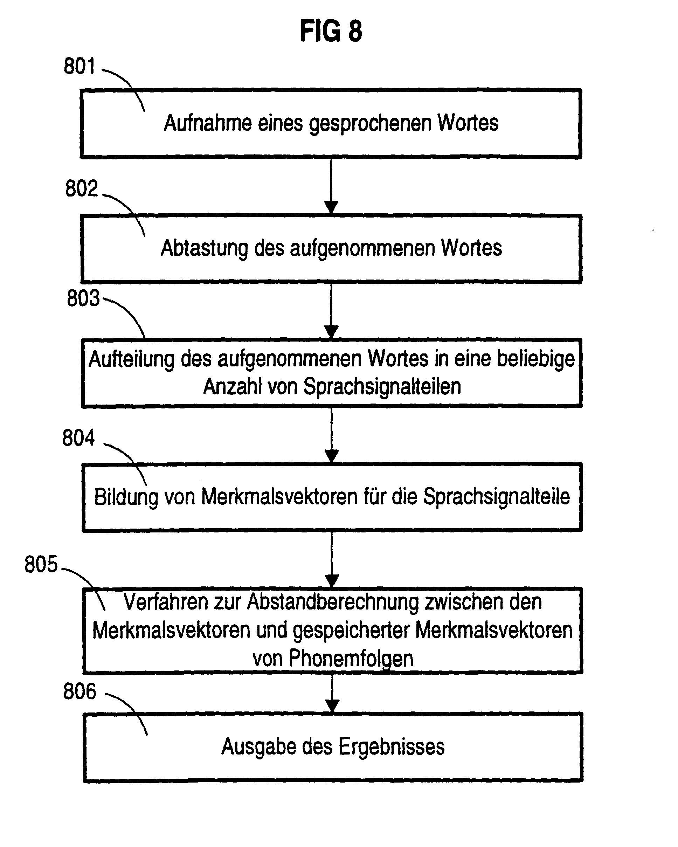

In Fig. 8 ist in Form eines Ablaufdiagramms ein Verfahren zur Spracherkennung unter Verwendung eines digitalen Wörterbuchs, welches durch das Verfahren aufgebaut wurde, dargestellt.

Bei diesem Verfahren wird ein von dem Benutzer B gesprochenes Wort aufgenommen 801, das Wort abgetastet, also digitalisiert 802, und das Wort in eine beliebige Anzahl von Sprachsignalteilen aufgeteilt 803.

Für die einzelnen Sprachsignalteile werden Merkmalsvektoren gebildet 804, beispielsweise mittels Fouriertransformation. Unter Verwendung eines Verfahrens zur Abstandsberechnung zwischen den gebildeten Merkmalsvektoren und gespeicherten Merkmalsvektoren der Phonemfolgen oder auch einzelnen Segmenten der Phoneme werden Wahrscheinlichkeiten ermittelt, durch die angegeben wird, wie wahrscheinlich die jeweilige Folge der Merkmalsvektoren für dieses Phonem ist 805. Anschließend wird in dem digitalen Wörterbuch das Wort, repräsentiert durch die Phonemfolge, beispielsweise nach dem sogenannten Viterbi-Verfahren oder auch dem Verfahren der dynamischen Programmierung das Wort in dem digitalen Wörterbuch gesucht.

In einem letzten Schritt 806 wird das erkannte Wort in einer Ausgabeeinheit dem Benutzer B zur Kenntnis gebracht. Die Ausgabeeinheit kann beispielsweise ein Bildschirm, ein Lautsprecher, oder auch ein Drucker sein.

In diesem Dokument wurden folgende Veröffentlichungen zitiert:

[1] K. Wothke, Morphologically Based Automatic Phonetic Transcription, IBM Systems Journal, Vol. 32, No. 3, S. 486 - 511, 1993

[2] S. Besling, Heuristical and Statistical Methods for Grapheme-to-Phoneme Conversion, Proceedings KONVENS 1994, Vienna, Austria, S. 23 - 31, 1994

[3] W. Daelemans et al, Data-oriented Methods for Grapheme-to-Phoneme Conversion, Proceedings EACL 1993, Utrecht, S. 45 - 53, 1993

[4] K. Bauer et al, Expertensysteme: Einführung in Technik und Anwendung, SIEMENS AG, Engineering & Kommunikation, D. Nebendahl (Hrsg.), Siemens-Aktiengesellschaft (Abteilung Verlag), ISBN 3-8009-1495-6, S. 27 - 82, 1987

[5] L. De Vos, Rechnereinheit zur Spracherkennung und Verfahren zur rechnergestützten Abbildung eines digitalisierten Sprachsignals auf Phoneme, Amtliches Aktenzeichen P 19610848.9

[6] C. Maggioni, Verfahren zum Aufbau einer Farbtabelle in einer Computereinheit zur Klassifikation von Bildpunkten in einem Bild, Amtliches Aktenzeichen P 19516664.7

**Patentansprüche**

1. Anordnung zur Erstellung eines digitalen Wörterbuchs,

   - mit einem ersten Speicher (SP1) zur festen Speicherung von Standard-Worten und den Standard-Worten zugeordneter Phonemfolgen,
   - mit einem ersten Mittel (WB) zum anwendungsabhängigen Auswählen und Einlesen beliebiger elektronischer Dokumente, zu denen die Anordnung Zugriff hat,
   - mit einem Text-Phonem-Konverter (TPK) zur Bildung von Phonemfolgen für Zusatz-Worte, die aus den elektronischen Dokumenten ausgewählt werden, der mit dem ersten Mittel (WB) und einem zweiten Speicher gekoppelt ist, und
   - mit dem zweiten Speicher (SP2) zur anwendungsabhängigen temporären Speicherung der Zusatz-Worte und der von dem Text-Phonem-Konverter (TPK) gebildeten Phonemfolgen der Zusatz-Worte, wobei mindestens die Standard-Worte, die Zusatz-Worte und die Phonemfolgen in dem digitalen Wörterbuch enthalten sind.

2. Anordnung zur Spracherkennung,

   - mit einem ersten Speicher (SP1) zur festen Speicherung von Standard-Worten und den Standard-Worten zugeordneter Phonemfolgen,
   - mit einem ersten Mittel (WB) zum anwendungsabhängigen Auswählen und Einlesen beliebiger elektronischer Dokumente, zu denen die Anordnung Zugriff hat,
   - mit einem Text-Phonem-Konverter (TPK) zur Bildung von Phonemfolgen für Zusatz-Worte, die aus den elektronischen Dokumenten ausgewählt werden, der mit dem ersten Mittel (WB) und einem zweiten Speicher gekoppelt ist,
   - mit dem zweiten Speicher (SP2) zur anwendungsabhängigen temporären Speicherung der Zusatz-Worte und der von dem Text-Phonem-Konverter (TPK) gebildeten Phonemfolgen der Zusatz-Worte, wobei mindestens die Standard-Worte, die Zusatz-Worte und die Phonemfolgen in dem digitalen Wörterbuch enthalten sind, und
   - mit einem zweiten Mittel (HMM) zur sprecherunabhängigen Spracherkennung welches zur Spracherkennung den Inhalt des digitalen Wörterbuchs verwendet.

3. Anordnung nach Anspruch 1 oder 2, bei der zusätzlich eine Enzscheidungseinheit (WE) vorgesehen ist zur Auswahl der Zusatz-Worte aus den elektronischen Dokumenten, die von dem zweiten Mittel (WB) bestimmt wurden.

4. Anordnung nach einem der Ansprüche 1 bis 3, bei der ein dritter Speicher (SP3) vorgesehen ist zur Speicherung vorgegebener Vorrats-Worte und den Vorrats-Worten zugeordneter Phonemfolgen, die abhängig von der Anwendung in jeder Anwendung temporär gespeichert werden, wobei die Phonemfolgen der Vorrats-Worte eine höhere Qualität aufweisen als die Phonemfolgen, die von dem Text-Phonem-Konverter (TPK) gebildet werden.

5. Anordnung nach Anspruch 4, bei der die Anzahl der Vorrats-Worte größer ist als die Anzahl der Standard-Worte.

6. Anordnung nach einem der Ansprüche 1 bis 5,

   - mit einem vierten Speicher (SP4) zur Speicherung von Sprach-Merkmalsvektoren von Worten und/oder Worte, die von einem Benutzer vorgegeben werden, wobei die Sprach-Merkmalsvektoren jeweils einen Teil des Wortes charakterisieren, und
   - mit einem Mittel zum Vergleichen von BenutzerMerkmalsvektoren eines Teils eines digitalisierten Sprachsignals, die den Teil des digitalisierten Sprachsignals charakterisieren, mit gespeicherten Phonem-Merkmalsvektoren und/oder mit gespeicherten Sprach-Merkmalsvektoren, wobei die Phonem-Merkmalsvektoren jeweils das Phonem charakterisieren und wobei die Sprach-Merkmalsvektoren jeweils einen Teil des Wortes charakterisieren.

7. Verfahren zum Aufbau eines digitalen Wörterbuchs, welches Standard-Worte und den Standard-Worten zugeordnete Phonemfolgen aufweist, die in einem ersten Speicher (SP1) fest gespeichert werden, mit Hilfe eines Rechners,

   - bei dem elektronische Dokumente anwendungsabhängig ausgewählt werden, die Worte aufweisen,

- bei dem aus den elektronischen Dokumenten Zusatz-Worte ausgewählt werden,
- bei dem mit einem Text-Phonem-Konverter (TPK) zu jedem Zusatz-Wort eine das Zusatz-Wort charakterisierende Phonemfolge gebildet wird, die dem jeweiligen Zusatz-Wort zugeordnet wird,
- bei dem die Zusatz-Worte und die den Zusatz-Worten zugeordneten Phonemfolgen temporär anwendungsabhängig in einem zweiten Speicher (SP2) gespeichert werden und temporär dem digitalen Wörterbuch zugeordnet werden.

8. Verfahren nach Anspruch 7,
bei dem die Bestimmung der elektronischen Dokumente nach mindestens einer der folgenden Vorschriften erfolgt:

- es ist eine eindeutige Zuordnung der elektronischen Dokumente vorgegeben,
- es werden gesprochene Worte eines Benutzers von der Anordnung zur Spracherkennung erkannt und die Bestimmung erfolgt anhand der erkannten Worte und anhand einer vorgegebenen ersten Regelbasis,
- es werden gesprochene Worte eines Benutzers von der Anordnung zur Spracherkennung erkannt und die Bestimmung erfolgt anhand der erkannten Worte und anhand einer vorgegebenen ersten Regelbasis in einem interaktiven Dialog zwischen der Anordnung zur Spracherkennung und dem Benutzer,
- für jeden Dokumenttyp der elektronischen Dokumente werden den Dokumenttyp charakterisierende Informationen gespeichert, anhand der die elektronischen Dokumente bestimmt werden,

9. Verfahren nach Anspruch 7 oder 8,
bei dem die Auswahl der Zusatz-Worte aus den elektronischen Dokumenten nach mindestens einer der folgenden Vorgehensweisen erfolgt:

- es werden diejenigen Worte aus den elektronischen Dokumenten als Zusatz-Worte ausgewählt, die in den elektronischen Dokumenten in mindestens einer vorgebbaren Weise markiert sind,
- die Auswahl erfolgt anhand einer vorgegebenen zweiten Regelbasis,
- es werden diejenigen Worte aus den elektronischen Dokumenten als Zusatz-Worte ausgewählt, die in den elektronischen Dokumenten in mindestens einer vorgebbaren Weise markiert sind und die einen Wichtigkeitsfaktor aufweisen, der aus der Markierung abgeleitet wird, der größer ist als eine vorgebbare Anzahl Wichtigkeitsfaktoren anderer Worte,

- es werden diejenigen Worte aus den elektronischen Dokumenten als Zusatz-Worte ausgewählt, die in den elektronischen Dokumenten in mindestens einer vorgebbaren Weise markiert sind, wobei aus einer Angabe eines Dokumenttyps des jeweiligen elektronischen Dokuments die Markierungen ermittelt werden, die zur Auswahl der Zusatz-Worte verwendet werden.

10. Verfahren nach einem der Ansprüche 7 bis 9,
bei dem vorgegebene Vorrats-Worte und den Vorrats-Worten zugeordnete Phonemfolgen abhängig von der Anwendung in jeder Anwendung temporär gespeichert werden und dem Wörterbuch zugeordnet werden, wobei die Phonemfolgen der Vorrats-Worte eine höhere Qualität aufweisen als die Phonemfolgen, die von dem Text-Phonem-Konverter (TPK) gebildet werden.

11. Verfahren nach einem der Ansprüche 7 bis 10,

- bei dem ein von einem Benutzer gesprochenes, digitalisiertes Sprachsignal in eine beliebige Anzahl von digitalen Sprachsignalteilen aufgeteilt wird,
- bei dem für eine vorgebbare Anzahl der Sprachsignalteile für jeden Sprachsignalteil folgende Schritte durchgeführt werden:

  -- für den Sprachsignalteil wird ein Benutzer-Merkmalsvektor ermittelt, der den Sprachsignalteil charakterisiert,
  -- aus einem Vergleich des Benutzer-Merkmalsvektors mit mindestens einer beliebigen Anzahl von Phonem-Merkmalsvektoren, die jeweils ein gespeichertes Phonem charakterisieren, wird jeweils ein Ähnlichkeitswert des Benutzer-Merkmalsvektors mit dem jeweiligen Phonem-Merkmalsvektor ermittelt,
  -- die Ähnlichkeitswerte werden gespeichert,

- anhand der Ähnlichkeitswerte wird eine Folge von Phonemen für das digitalisierte Sprachsignal ermittelt, durch die das digitalisierte Sprachsignal beschrieben wird, und
- bei dem das digitalisierte Sprachsignal und die dem digitalisierten Sprachsignal zugeordnete Folge von Phonemen in einem vierten Speicher (SP4) gespeichert wird.

12. Verfahren zur sprecherunabhängigen Spracherkennung unter Verwendung eines nach einem der Ansprüche 7 bis 11 aufgebauten digitalen Wörterbuchs.

13. Verfahren nach Anspruch 12,

bei dem ein von einem Benutzer gesprochenes digitalisierte Sprachsignal in eine beliebige Anzahl von digitalen Sprachsignalteilen aufgeteilt wird,

bei dem aus den digitalisierten Sprachsignalteilen eine Folge von Merkmalsvektoren gebildet wird, durch die das digitalisierte Sprachsignal charakterisiert wird,

bei dem anhand der Merkmalsvektoren im Merkmalsraum eine Folge von Phonemen ermittelt wird, die der Folge von Merkmalsvektoren bezüglich eines Ähnlichkeitsmaßes am ähnlichsten ist,

bei dem sich ein erkanntes Wort ergibt aus der Folge von Phonemen.

**Claims**

1.  Arrangement for compiling a digital dictionary,

    -   having a first memory (SP1) for permanently storing standard words and phoneme sequences assigned to the standard words,
    -   having a first means (WB) for selecting and reading in, as a function of application, any electronic documents to which the arrangement has access,
    -   having a text-phoneme converter (TPK) for forming phoneme sequences for additional words which are selected from the electronic documents, which is coupled to the first means (WB) and a second memory, and
    -   having the second memory (SP2) for temporarily storing, as a function of application, the additional words and the phoneme sequences, formed by the text-phoneme converter (TPK), of the additional words, at least the standard words, the additional words and the phoneme sequences being contained in the digital dictionary.

2.  Arrangement for voice recognition,

    -   having a first memory (SP1) for permanently storing standard words and phoneme sequences assigned to the standard words,
    -   having a first means (WB) for selecting and reading in, as a function of application, any electronic documents to which the arrangement has access,
    -   having a text-phoneme converter (TPK) for forming phoneme sequences for additional words which are selected from the electronic documents, which is coupled to the first means (WB) and a second memory,
    -   having the second memory (SP2) for temporarily storing, as a function of application, the additional words and the phoneme sequences, formed by the text-phoneme converter (TPK), of the additional words, at least the standard words, the additional words and the phoneme sequences being contained in the digital dictionary, and

-   having a second means (HMM) for voice recognition independent of speaker which is used for voice recognition of the contents of the digital dictionary.

3.  Arrangement according to Claim 1 or 2, in which a decision unit (WE) is additionally provided for selecting the additional words from the electronic documents which have been determined by the second means (WB).

4.  Arrangement according to one of Claims 1 to 3, in which a third memory (SP3) is provided for storing prescribed supply words and phoneme sequences assigned to the supply words, which are stored temporarily in each application as a function of the application, the phoneme sequences of the supply words having a higher quality than the phoneme sequences which are formed by the text-phoneme converter (TPK).

5.  Arrangement according to Claim 4, in which the number of the supply words is greater than the number of the standard words.

6.  Arrangement according to one of Claims 1 to 5,

    -   having a fourth memory (SP4) for storing speech feature vectors of words, and/or words which are prescribed by a user, the speech feature vectors in each case characterizing a part of the word, and
    -   having a means for comparing user speech feature vectors of a part of a digitized voice signal, which characterize the part of the digitized voice signal, with stored phoneme feature vectors and/or with stored voice feature vectors, the phoneme feature vectors in each case characterizing the phoneme, and the voice feature vectors in each case characterizing a part of the word.

7.  Method for compiling a digital dictionary which has standard words and phoneme sequences assigned to the standard words, which are permanently stored in a first memory (SP1), with the aid of a computer,

    -   in which electronic documents, which have words, are selected as a function of application,
    -   in which additional words are selected from the electronic documents,

- in which a text-phoneme converter (TPK) is used in relation to each additional word to form a phoneme sequence which characterizes the additional word and is assigned to the respective additional word, and
- in which the additional words and the phoneme sequences assigned to the additional words are stored temporarily in a second memory (SP2) as a function of application, and are temporarily assigned to the digital dictionary.

8. Method according to Claim 7, in which the determination of the electronic documents is performed in accordance with at least one of the following rules:

- a unique assignment of the electronic documents is prescribed,
- spoken words of a user are recognized by the arrangement for voice recognition and the determination is performed with the aid of recognized words and with the aid of a prescribed first rule base,
- spoken words of a user are recognized by the arrangement for voice recognition and the determination is performed with the aid of the recognized words and with the aid of a prescribed first rule base in an interactive dialogue between the arrangement for voice recognition and the user, and
- for each document type of the electronic documents, information characterizing the document type is stored which is used to determine the electronic documents.

9. Method according to Claim 7 or 8, in which the selection of the additional words from the electronic documents is performed in accordance with at least one of the following modes of procedure,

- as additional words, those words are selected from the electronic documents which are marked in at least one prescribable way in the electronic documents,
- selection is performed with the aid of a prescribed second rule base,
- as additional words, those words are selected from the electronic documents which are marked in at least one prescribable way in the electronic documents and which have an important factor which is derived from the marking and is greater than a prescribable number of important factors of other words, and
- as additional words, those words are selected from the electronic documents which are marked in at least one prescribable way in the electronic documents, the markings which are used to select the additional words being determined from a specification of a document type of the respective electronic document.

10. Method according to one of Claims 7 to 9, in which prescribed supply words and phoneme sequences assigned to the supply words are temporarily stored in each application as a function of the application and are assigned to the dictionary, the phoneme sequences of the supply words having a higher quality than the phoneme sequences which are formed by the text-phoneme converter (TPK).

11. Method according to one of Claims 7 to 10,

- in which a digitized voice signal spoken by a user is split up into an arbitrary number of digital voice signal parts,
- in which the following steps are carried out for each voice signal part for a prescribable number of voice signal parts;

    -- a user feature vector which characterizes the voice signal part is determined for the voice signal part,
    -- a similarity value of the user feature vector with the respective phoneme feature vector is determined in each case from a comparison of the user feature vector with at least one arbitrary number of phoneme feature vectors which respectively characterize a stored phoneme,
    -- the similarity values are stored,

- with the aid of the similarity values, a sequence of phonemes is determined for the digitized voice signal by means of which the digitized voice signal is described, and
- in which the digitized voice signal and the sequence of phonemes which is assigned to the digitized voice signal are stored in a fourth memory (SP4).

12. Method for voice recognition independent of speaker by using a digital dictionary compiled in accordance with one of Claims 7 to 11.

13. Method according to Claim 12,

- in which a digitized voice signal spoken by a user is split up into an arbitrary number of digital voice signal parts,
- in which a sequence of feature vectors, by means of which the digitized voice signal is characterized, is formed from the digitized voice signal parts,
- in which a sequence of phonemes which is most similar to the sequence of feature vectors with reference to a similarity measure is determined with the aid of the feature vectors in the feature space, and

- in which a detected word follows from the sequence of phonemes.

## Revendications

1. Dispositif pour élaborer un dictionnaire numérique,

   - avec une première mémoire (SP1) pour stocker de manière fixe des mots standard et des suites de phonèmes attribuées auxdits mots standard,
   - avec un premier moyen (WB) pour sélectionner et introduire en mémoire, en fonction de l'application, des documents électroniques quelconques auxquels le dispositif a accès,
   - avec un convertisseur de phonèmes de texte (TPK) pour former des suites de phonèmes pour des mots additionnels sélectionnés dans les documents électroniques, qui est couplé avec le premier moyen (WB) et une deuxième mémoire, et
   - avec ladite deuxième mémoire (SP2) pour stocker temporairement, en fonction de l'application, les mots additionnels et les suites de phonèmes formées par le convertisseur de phonèmes de texte (TPK) desdits mots additionnels, dans le dictionnaire numérique étant contenus au moins les mots standard, les mots additionnels et les suites de phonèmes.

2. Dispositif pour la reconnaissance vocale,

   - avec une première mémoire (SP1) pour stocker de manière fixe des mots standard et des suites de phonèmes attribuées auxdits mots standard,
   - avec un premier moyen (WB) pour sélectionner et introduire en mémoire, en fonction de l'application, des documents électroniques quelconques auxquels le dispositif a accès,
   - avec un convertisseur de phonèmes de texte (TPK) pour former des suites de phonèmes pour des mots additionnels sélectionnés dans les documents électroniques, qui est couplé avec le premier moyen (WB) et une deuxième mémoire,
   - avec ladite deuxième mémoire (SP2) pour stocker temporairement, en fonction de l'application, les mots additionnels et les suites de phonèmes formées par le convertisseur de phonèmes de texte (TPK) desdits mots additionnels, dans le dictionnaire numérique étant contenus au moins les mots standard, les mots additionnels et les suites de phonèmes, et
   - avec un deuxième moyen (HMM) pour la reconnaissance vocale indépendante du locuteur, qui utilise pour la reconnaissance vocale le contenu du dictionnaire numérique.

3. Dispositif selon la revendication 1 ou 2, dans lequel est prévue en supplément une unité de décision (WE) pour sélectionner les mots additionnels dans les documents électroniques qui ont été déterminés par le premier moyen (WB).

4. Dispositif selon l'une des revendications 1 à 3, dans lequel est prévue une troisième mémoire (SP3) pour stocker des mots de réserve définis à l'avance et des suites de phonèmes attribuées auxdits mots de réserve, qui en fonction de l'application sont stockés temporairement dans chaque application, les suites de phonèmes des mots de réserve étant d'un plus haut niveau de qualité que les suites de phonèmes formées par le convertisseur de phonèmes de texte (TPK).

5. Dispositif selon la revendication 4, dans lequel le nombre de mots de réserve est supérieur au nombre de mots standard.

6. Dispositif selon l'une des revendications 1 à 5,

   - avec une quatrième mémoire (SP4) pour stocker des vecteurs de caractéristiques vocaux de mots et/ou de mots définis à l'avance par un utilisateur, les vecteurs de caractéristiques vocaux caractérisant à chaque fois une portion du mot, et
   - avec un moyen pour comparer des vecteurs de caractéristiques d'utilisateur d'une portion d'un signal vocal numérisé, qui caractérisent la portion du signal vocal numérisé, avec des vecteurs de caractéristiques de phonème stockés en mémoire et/ou avec des vecteurs de caractéristiques vocaux stockés en mémoire, les vecteurs de caractéristiques de phonème caractérisant à chaque fois le phonème et les vecteurs de caractéristiques vocaux caractérisant à chaque fois une portion du mot.

7. Procédé pour constituer un dictionnaire numérique, lequel comporte des mots standard et des suites de phonèmes attribuées auxdits mots standard que l'on stocke de manière fixe dans une première mémoire (SP1) au moyen d'un ordinateur,

   - dans lequel on sélectionne, en fonction de l'application, des documents électroniques qui comportent des mots,
   - dans lequel on sélectionne dans les documents électroniques des mots additionnels,
   - dans lequel on forme, à l'aide d'un convertisseur de phonèmes de texte (TPK), pour chaque mot additionnel, une suite de phonèmes caractérisant le mot additionnel, qui est attribuée au mot additionnel respectif,

- dans lequel on stocke temporairement les mots additionnels et les suites de phonèmes attribuées auxdits mots additionnels, en fonction de l'application, dans une deuxième mémoire (SP2), et on les attribue temporairement au dictionnaire numérique.

8. Procédé selon la revendication 7, dans lequel on détermine les documents électroniques selon au moins l'une des prescriptions suivantes :

- une attribution univoque des documents électroniques est définie à l'avance,
- les mots parlés d'un utilisateur sont reconnus par le dispositif de reconnaissance vocale, et la détermination se fait à l'aide des mots reconnus et à l'aide d'une première base de règles définie à l'avance,
- les mots parlés d'un utilisateur sont reconnus par le dispositif de reconnaissance vocale, et la détermination se fait à l'aide des mots reconnus et à l'aide d'une première base de règles définie à l'avance, dans un dialogue interactif entre le dispositif de reconnaissance vocale et l'utilisateur,
- pour chaque type de document des documents électroniques, on stocke en mémoire des informations caractérisant le type de document, et à l'aide de celles-ci on détermine les documents électroniques.

9. Procédé selon la revendication 7 ou 8, dans lequel on sélectionne les mots additionnels dans les documents électroniques selon au moins l'une des procédures suivantes :

- on sélectionne comme mots additionnels dans les documents électroniques ceux qui sont marqués dans lesdits documents électroniques au moins selon une manière définissable à l'avance,
- la sélection se fait à l'aide d'une deuxième base de règles définie à l'avance,
- on sélectionne comme mots additionnels dans les documents électroniques ceux qui sont marqués dans lesdits documents électroniques au moins selon une manière définissable à l'avance et qui comportent un facteur d'importance que l'on déduit du marquage, qui est plus grand qu'un nombre définissable à l'avance de facteurs d'importance d'autres mots,
- on sélectionne comme mots additionnels dans les documents électroniques ceux qui sont marqués dans lesdits documents électroniques au moins selon une manière définissable à l'avance, les marquages utilisés pour sélectionner les mots additionnels étant déterminés à partir d'une indication d'un type de document du document électronique respectif.

10. Procédé selon l'une des revendications 7 à 9, dans lequel on stocke temporairement des mots de réserve définis à l'avance et des suites de phonèmes attribuées auxdits mots de réserve, en fonction de l'application, dans chaque application et on les attribue au dictionnaire, les suites de phonèmes des mots de réserve étant d'un plus haut niveau de qualité que les suites de phonèmes formées par le convertisseur de phonèmes de texte (TPK).

11. Procédé selon l'une des revendications 7 à 10,

- dans lequel on divise un signal vocal numérisé émis par un utilisateur en un nombre quelconque de portions de signal vocal,
- dans lequel on effectue pour un nombre de portions de signal vocal définissable à l'avance, pour chaque portion de signal vocal, les étapes suivantes :

  -- on détermine pour la portion de signal vocal un vecteur de caractéristiques d'utilisateur qui caractérise ladite portion de signal vocal,
  -- on détermine à partir d'une comparaison du vecteur de caractéristiques d'utilisateur avec au moins un nombre quelconque de vecteurs de caractéristiques de phonème caractérisant à chaque fois un phonème stocké en mémoire, une valeur de similitude entre le vecteur de caractéristiques d'utilisateur et le vecteur de caractéristiques de phonème respectif,
  -- on stocke en mémoire les valeurs de similitude,
  -- on détermine à l'aide des valeurs de similitude une suite de phonèmes pour le signal vocal numérisé, qui sert à décrire le signal vocal numérisé, et

- dans lequel on stocke le signal vocal numérisé et la suite de phonèmes attribuée audit signal vocal numérisé dans une quatrième mémoire (SP4).

12. Procédé pour la reconnaissance vocale indépendante du locuteur grâce à l'utilisation d'un dictionnaire numérique constitué selon l'une des revendications 7 à 11.

13. Procédé selon la revendication 12,

- dans lequel on divise un signal vocal numérisé émis par un utilisateur en un nombre quelconque de portions de signal vocal numérique,

- dans lequel on forme à partir desdites portions de signal vocal numérique une suite de vecteurs de caractéristiques qui caractérisent le signal vocal numérisé,

- dans lequel on détermine à l'aide des vecteurs de caractéristiques dans l'espace des caractéristiques une suite de phonèmes qui par rapport à un degré de similitude est la plus similaire possible à la suite de vecteurs de caractéristiques,

- dans lequel un mot reconnu résulte de la suite de phonèmes.

# FIG 1

# FIG 2

# FIG 3

**FIG 4**

K

KO

B

WB

SP1

WE

SP2

TPK

SP3

HMM

MHT

BU

# FIG 5

```
                                           ┌─501
        ┌──────────────────────────────┐
        │   Bestimmung elektronischer  │
        │          Dokumente           │
        └──────────────────────────────┘
                        │
                        │          ┌─ 502
                        ▼
        ┌──────────────────────────────┐
        │  Auswahl digitaler Zusatz-   │
        │        Worte aus den         │
        │   elektronischen Dokumenten  │
        └──────────────────────────────┘
                        │
                        │
                        ▼
        ┌──────────────────────────────┐─503
        │  Bildung von Phonemfolgen    │
        │    für die digitalen Zusatz- │
        │            Worte             │
        └──────────────────────────────┘
                        │
                        │
                        ▼
        ┌──────────────────────────────┐─504
        │   Speicherung der digitalen  │
        │       Zusatz-Worte und der   │
        │   zugehörigen Phonemfolgen   │
        └──────────────────────────────┘
```

## FIG 6

# FIG 7

502

Auswahl digitaler Zusatz-
Worte aus den
elektronischen Dokumenten

701

Markierte digitale
Worte

702

anhand zweiter
Regelbasis

Markierte digitale
Worte und daraus
abgeleitete
Wichtigkeitsfaktoren

703

# FIG 8

801

| Aufnahme eines gesprochenen Wortes |
|---|

802

| Abtastung des aufgenommenen Wortes |
|---|

803

| Aufteilung des aufgenommenen Wortes in eine beliebige Anzahl von Sprachsignalteilen |
|---|

804

| Bildung von Merkmalsvektoren für die Sprachsignalteile |
|---|

805

| Verfahren zur Abstandberechnung zwischen den Merkmalsvektoren und gespeicherter Merkmalsvektoren von Phonemfolgen |
|---|

806

| Ausgabe des Ergebnisses |
|---|